# EUROPEAN PATENT SPECIFICATION

(11) **EP 1 405 148 B1**
(45) Date of publication and mention of the grant of the patent: **29.08.2007**
(21) Application number: 01990507.4
(22) Date of filing: 29.11.2001
(51) Int. Cl.: G06F 21/00

(54) **SECURE SUPER DISTRIBUTION OF USER DATA**
SICHERE SUPERVERTEILUNG VON BENUTZERDATEN
SUPERDISTRIBUTION SECURISEE DE DONNEES UTILISATEUR

(30) Priority: 18.12.2000 EP 00204637
(43) Date of publication of application: 07.04.2004
(73) Proprietor: Koninklijke Philips Electronics N.V., 5621 BA Eindhoven (NL)
(72) Inventor: STARING, Antonius, A., M., NL-5656 AA Eindhoven (NL); KAMPERMAN, Franciscus, L., A., J., NL-5656 AA Eindhoven (NL)
(74) Representative: Deguelle, Wilhelmus H. G.
(86) International application number: PCT/EP2001/014245
(87) International publication number: WO 2002/050638

(56) References cited:
- EP-A- 0 704 785
- US-A- 5 646 992

## Description

The invention relates to a method for secure super distribution of user data stored on a first data carrier. The invention relates further to a system for secure super distribution of user data, to an apparatus for reproduction and/or recording of user data and to a data carrier for a storing user data.

Super distribution is an approach to distributing software in which software is made available freely and without restriction but is protected from modifications and modes of usage not authorized by its vendor. The super distribution architecture which is for example known from R. Mori and M. Kawahara, "Super distribution - The Concept and the Architecture", The Transaction Of The IEICE, Vol. E 73, No. 7, pages 1133-1146, July 1990 (found on http://www:virtualschool.edu/mon/electronicproperty/morisuperdist.html) provides three principle functions: administrative arrangements for collecting accounting information on software usage and fees for software usage; an accounting process that records and accumulates usage charges, payments and the allocation of usage charges among different software vendors; and a defense mechanism, utilizing digitally protected modules, that protects the system against interference with its proper operation.

Super distribution software is distributed over public channels in encrypted form. It has the following combination of desirable properties:
- Software products are freely distributed without restriction. The user of a software product pays for the use of that product, not for possessing it.
- The vendor of a software product can set the terms and conditions of its use in the schedule of fees, if any, for its use.
- Software products can be executed by any user having the proper equipment, provided only that the user adheres to the conditions of use set by the vendor and pays the fees charged by the vendor.
- The proper operation of the super distribution system, including the enforcement of the conditions set by the vendors, is ensured by tamper-resistant electronic devices, e. g. smart cards.

Super distribution cannot only be used for the distribution of software but also in general for the distribution of user data like audio and video data. Super distribution of audio and video content can be an attractive business model for record and movie companies. The reason is that in such a model, consumers assume part of the distributor's role by copying data, e.g. their favorite albums for their friends. Accordingly, and e.g. depending on the success of the album, the cost of manufacturing and distributing physical media can be greatly reduced. Clearly, a business model relying on super distribution is viable only if the use of copies is properly being paid for, which requires enforcement by a reliable content protection system. Such a system will be based on a play control mechanism that employs encryption and, most likely, watermarking technologies.

EP 0 704 785 A2 discloses a data copyright management system comprising a database for storing original data, a key control center for managing crypt keys, a copyright management center for managing data copyrights, and a communication network for connecting these sections to each other. Data supplied from the database to users is encrypted and distributed, and the users decrypt the encrypted data by crypt keys obtained from the key control center or copyright management center to use the data. Two methods are provided for supplying data to users, in particular a one-way supplying encrypted data to users by means of broadcastings or the like, and a two-way supplying encrypted data to users corresponding to users' requests.

US 5,646,992 discloses methods for assembly, distribution and use of digital information. Hierarchically organized graphical representations of items and groups of the items of digital information which are available to be ordered by a user are displayed. The user interactively explores the representations and selects items or groups to be ordered, using a pointer. While the graphical representations are being displayed, a list of items or groups which have been selected for inclusion in an order is also displayed. Software is executed which automatically determines the configuration of the computer, and matches the configuration with the stored configuration information prior to the user placing an order. A user may automatically be given access to items in a later revision of the medium if the user had access to the items in an earlier revision.

It is an object of the present invention to provide a method for secure super distribution of user data which also allows the realization of different business models.

This object is achieved by a method according to claim 1 comprising the steps of
a) copying said user data from said first data carrier to a second data carrier;
b) storing on said second data carrier information that is required by a service center for granting access rights to said copy of said user data; and
c) obtaining access rights to said copy of said user data by transmitting at least said stored information to said service center, completing a transaction, and receiving additional access information, wherein said service center uses said stored information to grant access rights to said copy of said user data for said second data carrier;
wherein said first and second data carriers each comprise a unique carrier identifier, and that said stored information consists of at least a code value determined from at least said unique carrier identifiers of said first and second data carrier.

The present invention is based on the idea of:
a) copy control: copying the super distributed content - which is not yet accessible because a transaction with a service center has not been completed yet - to another location than the second data carrier is useless because access will not be granted by a service center for that other location; and
b) access control: after completing a transaction with a service center, the super distributed copy on the second data carrier can only be accessed subject to a Digital Rights Management (DRM) system.

A further rationale for introducing a concept like the so called unicast super distribution is that it provides means to render originals more attractive than copies, even if there is no apparent difference, and thereby supports the retail market. For example, in the case of unicast super distribution there is a direct link between the owner of the original data carrier and the owner of the second data carrier, for whom the super distributed copy is intended. Thus, unicast super distribution (in)directly exploits existing social relationship between people, and may even strengthen such relationships by encouraging community building. In addition, unicast super distribution may provide additional security, because it is not very useful to publish (encrypted) user data on the Internet for general downloading, because a service center will not grant access to a copy of the user data that was obtained via that way.

The decision of whether to grant or refuse access to such a copy is completely up to the service center; technically there is no reason that the service center would not be able to grant access, e.g. because of insufficient information. Finally, by having only originals be eligible for super distribution - which is a way to render originals more attractive than super distributed copies, e. g. because there is a system of rewards associated with super distribution, e. g. via earnings of sound "miles" - the growth rate of the number of super distributed copies is expected to be about equal to the growth rate of the number of sold originals (assuming that for each sold original there will be about one super distributed copy made). Again this is a feature which supports the retail market.

The information that is required by the service center for granting access rights to the copy of the user data may be any information that can be used by the service center to identify the user data. For example, the information may consist of any of the following or a combination thereof:
- a unique identifier of the user data, e. g. the ISRC number of a music track;
- a unique identifier of a collection of user data, e. g. an album title;
- a decryption key of the user data, encrypted in the public key of the service center;
- a unique identifier of the original data carrier;
- a unique identifier of the destination data carrier;
- an identifier of the original owner of the user data;
- code values derived from any of the above identifiers.

To support the realization of a business model that is based on secure super distribution, a preferred embodiment of the present invention is based on the idea to employ a unique carrier identifier on a first data carrier, i.e. a unique disc ID on a pre-recorded (ROM) disc. From this unique carrier identifier a code value is determined, preferable by a player of the first data carrier, which is stored by a recorder on the second data carrier together with the unique carrier identifier of the first data carrier. In order to enable the second data carrier, i.e. the copy of the first data carrier, the code value and the unique carrier identifier have to be transmitted to a service center, e.g. the content owner of the user data stored on the first data carrier, where these data are decoded and/or verified and, in case of a positive result, the required rights and information are transmitted back to the recorder or player of the second data carrier to enable it.

In preferred embodiments of the invention further identifiers are used to increase the functionality of the proposed method for super distribution, e. g. from whom to whom is the copy made. In particular, a super distribution identifier which may be stored on the first data carrier and used for determining the code value and verifying the code value at the service center can be used.

In a further embodiment of the invention one or more keys, which can be part of a key hierarchy, are used to encrypt the user data which are stored in encrypted form on the first data carrier. These keys need to be provided from the service center for enabling the second data carrier. Such keys can for example be derived from a physical disc mark, e.g. a wobble on an optical record carrier.

In a further aspect of the invention a super distribution player key and a super distribution recorder key are used to encrypt the code value before storing it on the second data carrier. The decryption is then done by the service center after the encrypted code value has been transmitted to the service center for enabling the second data carrier.

Additionally, in a still further aspect of the invention a player identifier and a recorder identifier are used which are also stored on the second data carrier and transmitted to the service center for decrypting the super distribution player key and recorder key for enabling the second data carrier.

Alternatively, the decryption of the twice encrypted code value can also be done by a player and/or recorder manufacturer using the player and/or recorder identifiers. Thus the device manufacturers are involved in the process of enabling the second data carrier, and it can be made sure that only compliant devices are used which also increases the security of the proposed super distribution method.

In a preferred embodiment of the invention it is proposed to return benefits from the service center to the owner of the first data carrier in response to a secure super distribution of the user data stored on the first data carrier. Such return of benefits is part of a business model where copying and secure distribution of the user data shall be stimulated. Benefits can be the reward of the original source of the super distributed content with "music miles" if access to this content is bought by someone. Other examples are the free access to a "personal access code" as described in European patent application 00 201 663.2 to unlock a bonus track on the original data carrier or bonus points for a rebate on a future purchase. It is also possible to control that such benefits are only returned if a direct copy of an original data carrier has been made. This mechanism assures that it remains attractive to buy original data carriers which gives a mechanism for copy protection on access controlled content.

In a further preferred embodiment an award code value generated from at least the unique carrier identifier of the first data carrier is transmitted to the service center in order to collect the awarded benefits. The service center can thus determine if and how many benefits shall be rewarded to the owner of the first data carrier.

Preferably optical record carriers, in particular recordable and/or rewritable CDs or DVDs, are used as data carriers according to the invention. It is, however, further possible to use all other kinds of storage media as data carriers in the sense of the invention. Preferably the method according to the invention is used for super distribution of software, video and/or audio data stored on such data carriers.

In one embodiment of the invention the second data carrier does also comprise a unique carrier identifier which is used to determine the code value and which is also transmitted to the service center for enabling the second data carrier. Such a unique carrier identifier of the second data carrier is preferably used if the destination of the used data is of importance.

The invention relates further to a system for secure super distribution of user data comprising a player and a recorder, transmission means and a service center as claimed in claim 12. Further, the invention relates to an apparatus for reproduction and/or recording of user data for use in such a system and to a data carrier for storing user data and super distribution data to be used in a method for secure super distribution according to the invention. It shall be understood that such system, apparatus and data carrier according to the invention can be developed further and can have further embodiments which are identical or similar to those embodiments as described above and as laid down in the subclaims of claim 1.

From a high level point of view the method and the system according to the invention operate as follows. A pre-recorded disc contains content that it is encrypted with an asset key which can be stored in a key locker, such as described in European patent application 00 202 888.4. But also a key that is derived from a first physical disc mark, e.g. a wobble of an optical record carrier can be used. This key may be part of a key hierarchy and as such is not used to directly encrypt the content itself, but rather an intermediate set of keys. For a proper operation of the method and the system, the payload of this disc mark is preferably required to be a secret, i.e. it is accessible by compliant players only. The payload is unique per disc title, but does not need to be unique per disc, i.e. the keys and encrypted content on all pre-recorded discs are identical. This should not be a problem for the content owner, as the pre-recorded discs all are originals of known manufacture.

In addition to the first physical disc mark there is a second, preferably secret disc mark on the pre-recorded (ROM) disc, which is unique for each disc. The payload of this second mark can be used during all phases of the super distribution process to prevent uncontrolled super distribution. The key for playback, i. e. the asset key, will be (securely) delivered by the service center. On the copy, provisions are made to ascertain that the content can be made playable on that particular disc only, in order to prevent uncontrolled distribution via the Internet. For this purpose, the recordable or rewritable disc contains a unique disc mark which is used to derive the key(s) required to decrypt the content. For a recordable or rewritable disc this unique disc mark may be pre-embossed on the disc or written by the recorder.

It is an aspect of the invention to make sure that it is only possible to make a copy of the source to one sink. Copying from one source to multiple sinks, i. e. over the Internet, could also be allowed. Not using a unique disc identifier for the sink would make this possible. However, the bonus system could in this case operate unfair. If one person manages to open a popular web-site from which everybody copies files, he would collect all bonus benefits. If in contrast an original disc would always be needed to make a copy only buyers of original discs would be awarded.

Upon completion of the transaction, the content owner, i. e. the service center, provides the key(s) which are used by the recorder to render the copy (and only that particular copy) playable. At some point in the transaction a content owner has been able to determine the unique carrier identifier of the original disc. To provide an incentive for the consumer to make super distributed copies for friends, the content owner can decide to provide some kind of benefit to the owner of the original disc. For example, free access to a "personal access code" can be given that can be used to unlock a bonus track on the original disc; all bonus points can be accumulated for a rebate on future purchase. If the content owner so desires, the super distributed copy itself can be used to make another super distributed copy, either ad infinitum or until a predetermined limit. In that case, a content owner can decide to return the benefits associated with super distributed content to any participant in the chain starting with the original disc (like a pyramid system). Clearly, secure super distribution of content enables a myriad of marketing models, which can be chosen on a per album basis, and can provide a rich source of marketing information.

The invention will now be explained in more detail with reference to the following drawings, in which
Fig. 1 shows a block diagram of a super distribution system according to the invention,
Fig. 2 shows a block diagram of the key hierarchy used in an embodiment of the invention,
Figs. 3A, 3B show the disc layout of an original and a copy,
Fig. 4 shows the steps for copying according to a first embodiment of the invention,
Fig. 5 shows the steps for enabling according to the first embodiment,
Fig. 6 shows the steps for benefits collection according to the first embodiment,
Fig. 7 shows the steps for a copying according to a second embodiment of the invention,
Figs. 8a, 8b show the steps for enabling according to the second embodiment and
Figs. 9a, 9b show the steps for benefits collection according to the second embodiment.

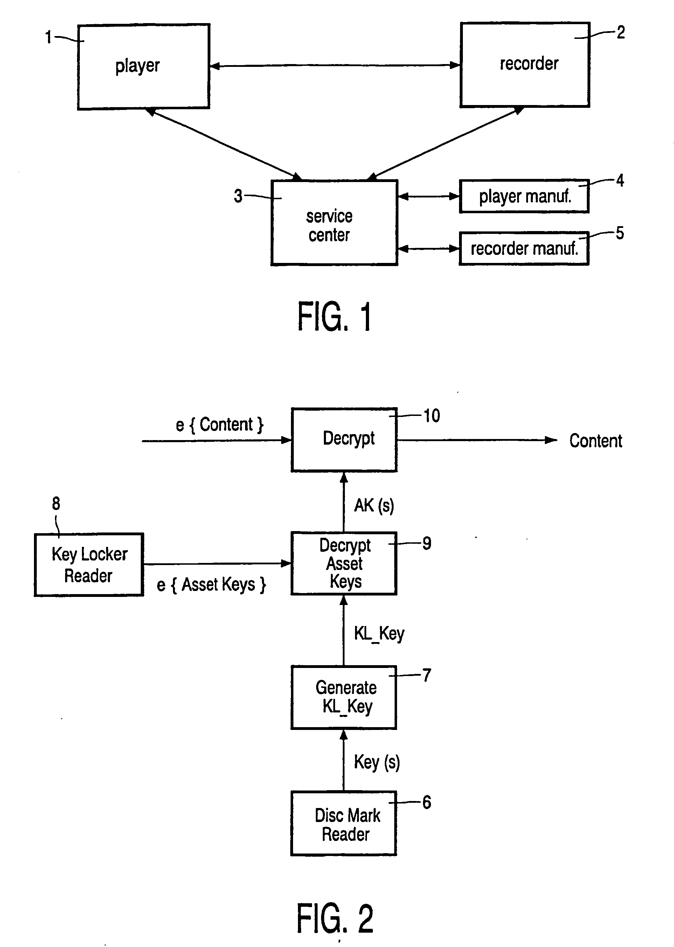

In the block diagram of figure 1 showing an embodiment of a super distribution system according to the invention a player 1 is shown for reproduction of a pre-recorded data carrier, e.g. a pre-recorded (ROM) disc containing user data, e.g. software, video or audio data. A recorder 2 is used to record the data stored on the first data carrier reproduced by the player 1 on a second data carrier, e.g. a rewritable or recordable disc. After the user data and all necessary super distribution data have been transmitted from the player 1 to the recorder 2 where these data have been stored on the second data carrier this second data carrier is enabled, i.e. it is provided with all necessary rights and information for the intended use of the second data carrier, by transmitting the required super distribution data to the service center 3 where these data are verified and data for enabling are returned to the recorder 2 if the verification has been successful. In order to verify the super distribution data provided from the recorder 2 the service center 3 may transmit part of the super distribution data to the player manufacturer 4 and/or the recorder manufacturer 5 for decryption and/or verification. The links between the player and the service center and between the service center and the player/recorder manufacturer are not essential, but optional. The link between the player and the service center is for possible benefit collection. The other links are used to get the manufacturers "in the loop" if desired. The system and the method for super distribution will be explained in more detail below.

A block diagram showing the key hierarchy used in a preferred embodiment of the invention is shown in figure 2. At first, a disc mark reader 6 is used to read physical disc marks provided on a disc to gain a first set of keys. From these keys a so-called key locker key KL_Key is generated in block 7. In parallel, a key locker reader 8 is used to get an encrypted version of asset keys which asset keys are used to encrypt user data. The function of the key locker reader 8 is to read the contents of the key locker off the disc. The key locker itself is a special area on the disc where the decryption keys (asset keys) and usage rights to the content are stored. The contents of the key locker is encrypted using the key locker key which is derived according to the key hierarchy shown in the figure.

In block 9 the asset keys are decrypted by use of the key locker key which asset key are then used in block 10 to decrypt the encrypted content, i.e. the user data stored on a disc. It shall be noted that the key hierarchy shown in Fig. 2 is only a possible system that maybe underlying to the system of the invention. There may be other possible designs that would work equally well.

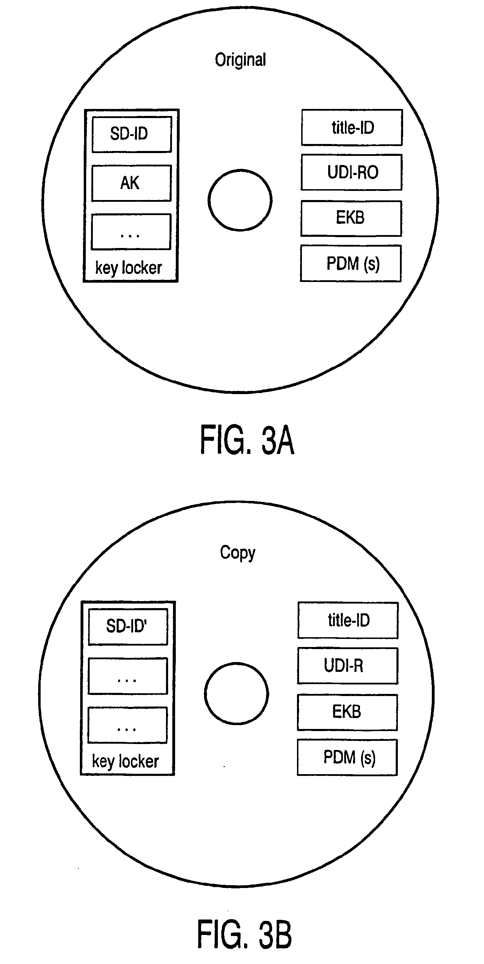

The layout of an original and a copy data carrier, i.e. the super distribution data stored on an original and a copy data carrier, which are both optical discs, is shown in figures 3A and 3B. The original disc shown in figure 3A comprises the following super distribution data:
- title-ID: a data identifier, which can be some number to identify the content title, which is not secret;
- UDI-RO: a unique carrier (disc) identifier, in particular of a ROM disc, which is not secret; UDI-RO is stored on the original (read-only) disc in a physical disc mark, and identifies a particular disc (i. e. it acts as a kind of serial number). It is not meant to be copied. On the copy, the equivalent of UDI-RO is UDI-R, which may either be prewritten on the copy (e. g. by a manufacturer), or be written by the recorder subject to a number of robustness and randomness rules. It is to be noted that UDI-R may be located inside the key locker.
- EKB: an enabling key block (not secret), which is a block of data containing a key which is encrypted by various player keys;
- PDM(s): physical disc mark(s). Such physical disc marks can only be read by compliant devices and they are preferably secret. If an EKB is used the PDM can also be not secret;
- SD-ID: a super distribution identifier, which can be some number used to support super distribution functionality, which is secret and which can be located in the key locker;
- AK: an asset key, which is used to encrypt some piece of content or user data (an asset).

Instead of the carrier identifier UDI-RO a copy disc shown in figure 3B comprises a carrier identifier UDI-R, which is a non-secret unique disc identifier of a recordable or rewritable disc. Further, an asset key AK is in first instance not stored on a copy disc. However, if the asset/track is enabled by the service center the key AK will be stored on the disc. Still further, a different super distribution identifier SD-ID' is stored on the copy disc. The SD-ID' could be generated by the recorder or could also be obtained by means of some communication with the service center. In the first case it has to be transmitted to the service center via a Secure Authenticated Channel.

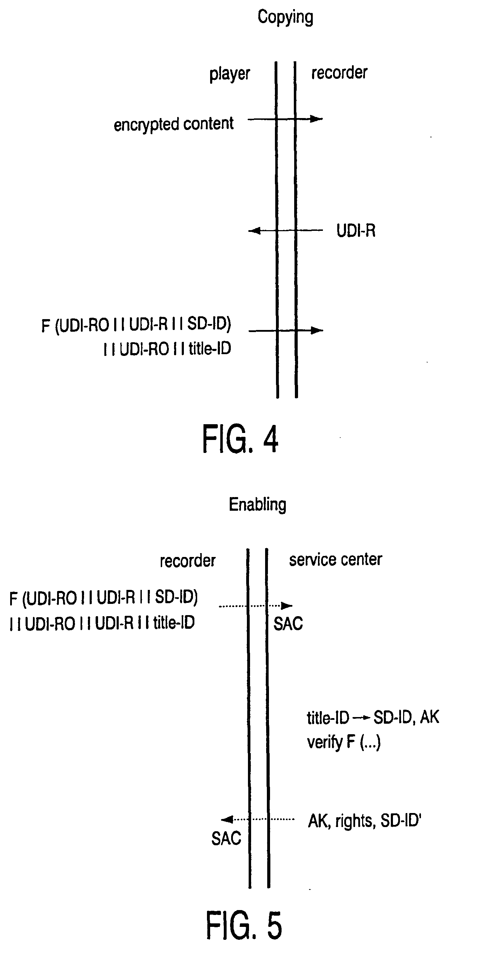

Figure 4 shows the steps for copying the user data stored on a first data carrier reproduced by a player to a second data carrier which recording is done in a recorder. In a first step the content of the first data carrier is transferred to the recorder in encrypted version and it is recorded on a second data carrier. In a second step the recorder returns the unique carrier identifier UDI-R of the second data carrier (a destination disc) so that the super distributed copy can be enabled on that disc only. In step 3 the player returns information required to enable the super distributed copy. This information comprises a code value, e.g. a hash or a function F, which includes the unique carrier identifier UDI-RO of the first data carrier to identify this specific source disc, the unique carrier identifier UDI-R of the second data carrier to identify this specific destination disc and a super distribution identifier SD-ID to make sure that only a compliant player could have calculated the code value or the hash result. Only a compliant player can calculate the code since only a compliant player can extract the SD-ID. Additionally the unique carrier identifier UDI-RO that is later required by the service center to verify the code value (the hash result) and the data identifier titled-ID that is required by the service center to determine a super distribution identifier SD-ID are transmitted to the recorder and stored on the second data carrier. Optionally, UDI-R can also be provided in the clear in the second communication from the player to the recorder.

The steps for enabling the second data carrier are shown in figure 5. The recorder first sends the information required to enable the copy to the service center, which information includes the code value F, the carrier identifier of the original UDI-RO and the data identifier titled-ID. The carrier identifier of the copy UDI-R is added to this information to enable the service center to verify the code value (the hash result). For the transfer of the data a secure authenticated channel SAC is set up to identify the originating recorder as well as for later use. Such a secure authenticated channel SAC is an interface which can be used to securely transfer data.

In the next step the service center determines the super distribution identifier SD-ID and the asset key AK from the data identifier title-ID, preferably using a data base, and verifies the code value (the hash result). In this step also a carrier identifier of the original UDI-RO is stored along in the service center with the awarded benefits, if any.

Finally in the last step the service center returns the asset key AK, the rights purchased by the recorder and another super distribution identifier SD-ID'. Additionally, also some kind of money transfer can be contained in the transaction. The secure authenticated channel SAC thereby guarantees that only a compliant recorder can receive this information.

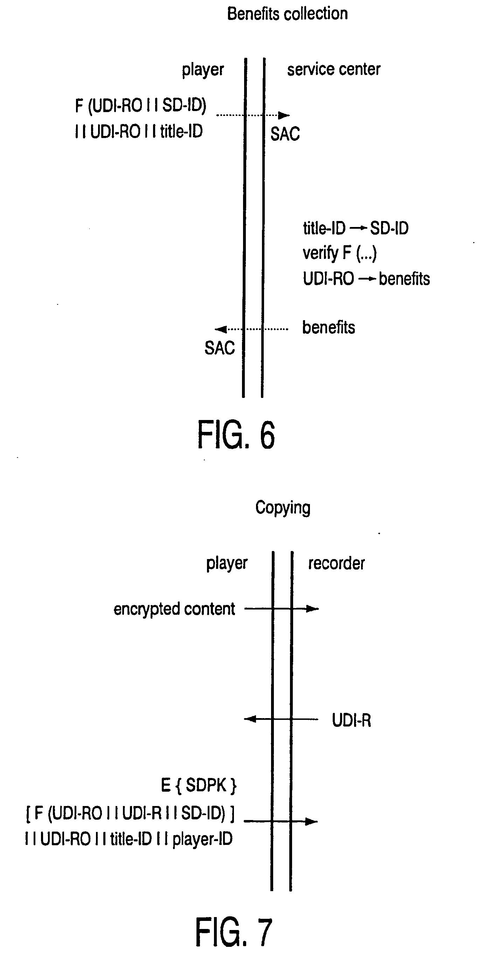

The steps for collecting benefits in the first embodiment are further explained with reference to figure 6. In a first step the player reproducing the original sends the information required to collect the benefits to the service center. This information includes another code value or hash which is different from the code value shown in figures 4 and 5. The hash used for benefits collection includes the carrier identifier of the original UDI-RO to identify the disc for which the benefits are collected and the super distribution identifier of the original SD-ID to make sure that only a compliant player could have calculated the hash result. Further, this information transmitted to the service center includes UDI-RO that is later required by the service center to verify the hash result and the data identifier title-ID that is required by the service center to determine the super distribution identifier SD-ID. Again, a secure authenticated channel SAC is set up to identify the originating player as well as for use in step 3 later.

In a second step the service center determines the super distribution identifier SD-ID from the data identifier title-ID, preferably by use of a data base, and verifies the hash result. The benefits are then determined from the carrier identifier UDI-RO, again preferably by use of a data base. In a third step the benefits or a benefit status overview are returned to the player by use of the secure authenticated channel SAC which ensures that the correct compliant player receives this information. Benefits may be coupled to the source disc or the player depending on a business requirements, not only to the disc.

The embodiment shown in figures 4 to 6 and described above uses asymmetric key cryptography to establish a Secure Authenticated Channel (SAC) and allows only copying from an original disc. Further, the device manufacturers are not in the transaction loop. However, the invention is not limited to a system and a method having such characteristics. The invention can also be used employing symmetric key cryptography only and where copying is also allowed from already copied discs. Further, the device manufacturers can be involved in the transaction loop as it will be shown in figures 7 to 9 and described in the following embodiment.

Figure 7 shows the steps for a copying procedure according to a second embodiment of the invention. In step 1 the content of the first data carrier is transferred to the recorder in encrypted form. In step 2 the recorder again returns the carrier identifier UDI-R of destination disc so that the super distributed copy can be enabled on that disc only. In step 3 the player returns information required to enable the super distributed copy, which information includes the hash (function F) of the carrier identifier UDI-RO to identify the specific source disc, the carrier identifier UDI-R to identify the specific destination disc and the super distribution identifier SD-ID to make sure that only a compliant player could have calculated the hash result and that only a rights holder can reverse a hash function (preferably using a data base). Before the information is transmitted to the recorder, optionally the hash result is encrypted using a super distribution player key SDPK which is unique for each player, to ensure that the player and recorder manufacturers have a symmetrical role in the enabling phase of the process. Additionally, the carrier identifier UDI-RO, that is later required by the service center to verify the hash result, and the data identifier title-ID, that is required by the service center to determine the super distribution identifier SD-D, as well as a player identifier player-ID to identifying the originating player are transmitted to the recorder. Optionally, UDI-R can also be provided in the clear in the second communication from the player to the recorder.

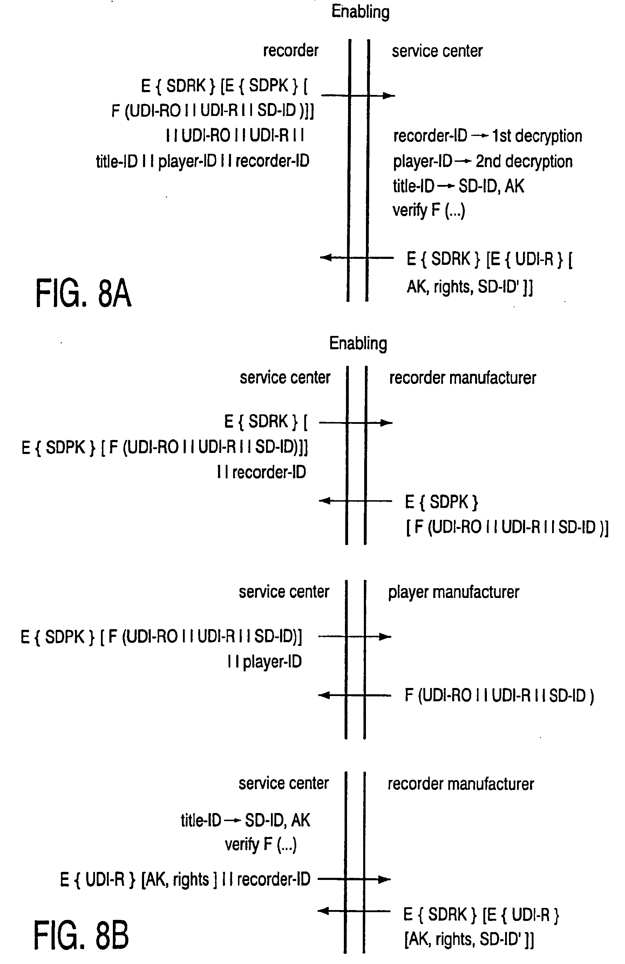

The steps for enabling in this embodiment are shown in figure 8a. In a first step the recorder sends the information required to enable the copy. The carrier identifier UDI-R is added to this information to enable the service center to verify the hash result. Before transmitting the hash result it is encrypted using a super distribution recorder key SDRK to guarantee that a particular recorder has sent the information. Further, a recorder identifier recorder-ID is added to identify the originating recorder. In a second step the service center contacts the player and recorder manufacturers for decryption of the hash result, and subsequently determines a super distribution identifier SD-ID and the asset key AK from the data identifier title-ID, preferably using a data base, and verifies the hash results. The carrier identifier UDI-RO provided from the recorder is stored along with the awarded benefits in the service center.

In a third step the service center returns the asset key AK and the rights purchased by the recorder. This information is first encrypted by using a key derived from the carrier identifier UDI-R to make sure that the recorder manufacturer cannot misuse this information. The encrypted information is then further encrypted by the recorder manufacturer to guarantee that only the proper recorder can receive the information. Encryption assures that the information returned by the service center can be used only to enable a specific copy, namely the one identified by UDI-R.

The communication between the service center and the recorder manufacturer or the player manufacturer for encrypting are shown in Fig. 8b.

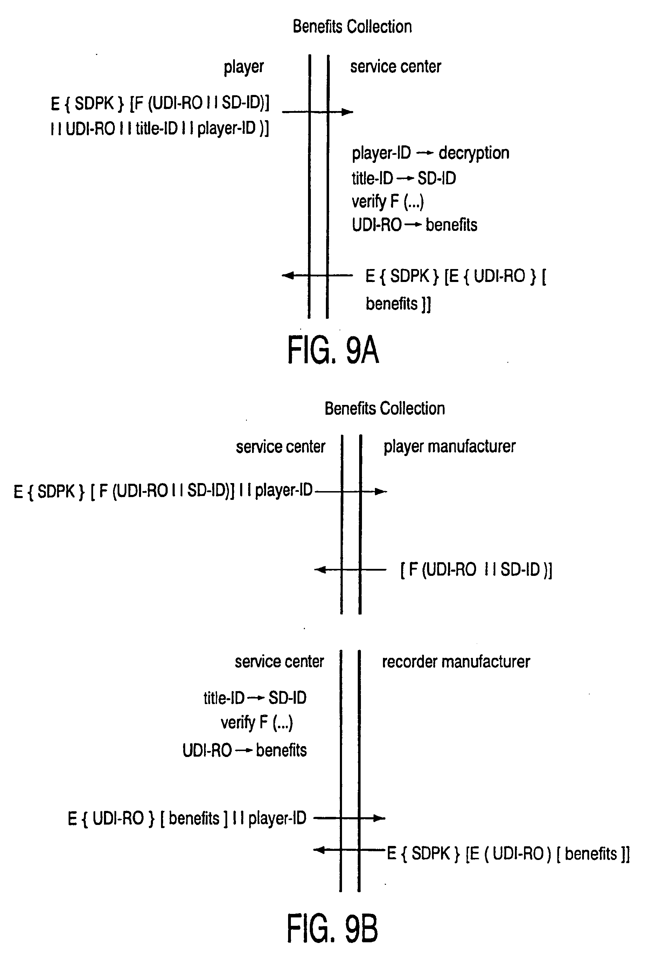

The steps for a benefits collection in the second embodiment are shown in figure 9a. Therein the player sends the information required to collect the benefits to the service center in step 1. This information comprises the hash which includes the carrier identifier UDI-RO to identify the disc for which the benefits are collected and the super distribution identifier SD-ID to make sure that only a compliant player could have calculated the hash result and that only the rights holder can reverse the hash function. Further the information transmitted to the service center comprises the carrier identifier UDI-RO that is later required by the service center to verify the hash result and the data identifier title-ID that is required by the service center to determine the super distribution identifier SD-ID. Before transmission the hash result is encrypted with a super distribution player key to guarantee that this information is sent by a compliant player.

In the second step the service center contacts the player manufacturer for decryption of the hash result, and subsequently determines the super distribution identifier SD-ID from the data identifier title-ID, preferably by use of a data base, and verifies the hash result. Additionally, the benefits are determined from the carrier identifier UDI-RO, preferably by use of a data base.

In the third step the benefits or a benefits status overview are returned to the player. Before transmission the information is first encrypted by using a key derived from the carrier identifier UDI-RO to make sure that the player manufacturer cannot misuse this information. A second encryption of this information is performed by the recorder manufacturer to guarantee that only the proper player can receive the information.

E{SDRK} and E{SDPK} indicate symmetrical encryption. It is of course also possible to use asymmetric encryption or a SAC already present. As the asset key AK should be a secret it can be protected by encrypting it by UDI-R(O) in the communication with the recorder manufacturer. The UDI on a disc does not need to be secret. However, encryption by an UDI-R(O) does give an increased security level as the recorder manufacturer does not know the UDI used during the super distribution.

The communication between the service center and the recorder manufacturer or the player manufacturer for encrypting are shown in Fig. 9b.

According to the invention a method and system for secure super distribution of user data is proposed. Various business models in which content is distributed by controlled home copying can be realized therein. Copies are rendered unplayable until a proper transaction has been completed. Further, new marketing opportunities are provided due to direct contact between the content owner and the consumer. Incentives can be given for consumers to copy the user data. E.g. copies can be cheaper than originals and benefits can be provided to the owner of originals, like free access to access codes for bonus tracks or rebates on future purchases ("sound miles"). Further, such method of super distribution is more convenient than downloading a full album from the Internet.

Measures can be taken to keep originals attractive, for example by only allowing originals to be eligible for super distribution, by preventing "factory" super distribution.

The method and the system according to the invention can be used to collect marketing information, e.g. by using the music miles. Devices used for transactions can stay anonymous or not. Further it can be decided if copying for super distribution could be only allowed online or also offline. In summary, the invention allows copy control which is performed over access-controlled content.

## Claims

1. Method for secure super distribution of user data stored on a first data carrier comprising the steps of
a) copying said user data from said first data carrier to a second data carrier,
b) storing on said second data carrier information that is required by a service center (3) for granting access rights to said copy of said user data; and
c) obtaining access rights to said copy of said user data by transmitting at least said stored information to said service center (3), completing a transaction, and receiving additional access information, said service center using said stored information to grant access rights to said copy of said user data for said second data carrier;
**characterized in that** said first and second data carriers each comprise a unique carrier identifier (UDI), and that said stored information consists of at least a code value (F) determined from at least said unique carrier identifiers (UDI) of said first and second data carrier.

2. Method according to claim 1, **characterized in that** access to said user data stored on said first data carrier is controlled by a digital rights management or conditional access system.

3. Method according to claim 1, **characterized in that** said unique carrier identifiers (UDI) are also transmitted to said service center (3).

4. Method according to claim 1 or 3, **characterized in that** said first data carrier comprises a super distribution identifier (SD-ID), which is used to determine said code value (F).

5. Method according to claim 1, **characterized in that** said code value (F) is encrypted by a super distribution player key (SDPK) before storing it on said second data carrier, and that said encrypted code value (F) is further encrypted by a super distribution recorder key (SDRK) before transmission to said service center.

6. Method according to claim 5, **characterized in that** said player identifier corresponding to said super distribution player key (SDPK) is stored on said second data carrier, and that said player identifier and a recorder identifier corresponding to said super distribution recorder key (SDRK) are transmitted to said service center (3).

7. Method according to claim 6, **characterized in that** decryption of said encrypted code value (F) is carried out by the respective player and/or recorder manufacturers (4, 5).

8. Method according to claim 1 or 2, **characterized in that** an award code value generated from at least said unique identifier of said first data carrier is transmitted to said service center in order to collect awarded benefits, which said service center (3) awards the owner of said first data carrier in response to a completed process of secure super distribution of said user data stored on said first data carrier.

9. Method according to claim 1 or 2, **characterized in that** optical discs, in particular recordable and/or rewritable CDs or DVDs, are used as data carriers.

10. Method according to claim 1 or 2, **characterized in that** said user data is audio data, video data, or software.

11. Method according to claim 1, **characterized in that** said service center (3) uses said stored information to grant access rights to said copy of said user data for said second data carrier only.

12. System for secure super distribution of user data stored on a first data carrier comprising
a) a player (1) and a recorder (2) for copying said user data from said first data carrier to a second data carrier, said first and second data carriers each comprising a unique carrier identifier (UDI) and storing super distribution data on said second data carrier;
b) transmission means for transmitting stored super distribution data to a service center (3); and
c) a service center (3) for granting access rights to said copy of said user data on said second data carrier,
**characterised in that**:
said player (1) is provided to determine a code value (F) from at least said unique carrier identifiers (UDI) of said first and second data carriers, and said recorder (2) is provided to store at least said code value (F) and said unique identifier (UDI-RO) of said first data carrier on said second data carrier.

13. Apparatus for reproduction and/or recording of user data for use in a system according to claim 12.

14. Data carrier for storing user data and super distribution data to be used in a method for secure super distribution according to claim 1, the super distribution data comprising
a) a unique carrier identifier (UDI-RO) identifying the data carrier,
b) a data identifier (title-ID) identifying the user data stored on the data carrier,
c) a super distribution identifier (SD-ID) used to provide super distribution functionality;
d) one or more keys (AK) to encrypt the user data and/or super distribution data,
**characterised in that** said super distribution data further comprises:
a code value (F) determined from at least said unique carrier identifier (UDI-RO) of said data carrier and a unique carrier identifier (UDI-R) of a second data carrier.

## Patentansprüche

1. Verfahren zur sicheren Superverteilung von Benutzerdaten, die auf einem ersten Datenträger gespeichert sind, welches die folgenden Schritte umfasst:
a) Kopieren der Benutzerdaten von dem ersten Datenträger auf einen zweiten Datenträger;
b) Speichern von Informationen auf dem zweiten Datenträger, welche von einem Service-Center (3) benötigt werden, um Zugriffsrechte auf die Kopie der Benutzerdaten zu gewähren; und
c) Erlangen von Zugriffsrechten auf die Kopie der Benutzerdaten durch Übertragen wenigstens der gespeicherten Informationen zu dem Service-Center (3), Durchführen einer Transaktion und Empfangen von zusätzlichen Zugriffsinformationen, wobei das Service-Center die gespeicherten Informationen verwendet, um Zugriffsrechte auf die Kopie der Benutzerdaten für den zweiten Datenträger zu gewähren;
**dadurch gekennzeichnet, dass**
der erste und der zweite Datenträger jeweils eine eindeutige Trägerkennung (UDI) umfassen, und dass die gespeicherten Informationen aus wenigstens einem Codewert (F) bestehen, der aus wenigstens den eindeutigen Trägerkennungen (UDI) des ersten und zweiten Datenträgers bestimmt wird.

2. Verfahren nach Anspruch 1, **dadurch gekennzeichnet, dass** ein Zugriff auf die Benutzerdaten, die auf dem ersten Datenträger gespeichert sind, durch ein digitales Rechteverwaltungs- (Digital Rights Management) System oder System des bedingten Zugriffs gesteuert wird.

3. Verfahren nach Anspruch 1, **dadurch gekennzeichnet, dass** die eindeutigen Trägerkennungen (UDI) auch zu dem Service-Center (3) übertragen werden.

4. Verfahren nach Anspruch 1 oder 3, **dadurch gekennzeichnet, dass** der erste Datenträger eine Superverteilungs-Kennung (SD-ID) umfasst, welche verwendet wird, um den Codewert (F) zu bestimmen.

5. Verfahren nach Anspruch 1, **dadurch gekennzeichnet, dass** der Codewert (F) mittels eines Superverteilungs-Playerschlüssels (SDPK) verschlüsselt wird, bevor er auf dem zweiten Datenträger gespeichert wird, und dass der verschlüsselte Codewert (F) ferner vor der Übertragung zu dem Service-Center mittels eines Superverteilungs-Recorderschlüssels (SDRK) verschlüsselt wird.

6. Verfahren nach Anspruch 5, **dadurch gekennzeichnet, dass** die Player-Kennung, die dem Superverteilungs-Playerschlüssel (SDPK) entspricht, auf dem zweiten Datenträger gespeichert wird, und dass die Player-Kennung und eine Recorder-Kennung, die dem Superverteilungs-Recorderschlüssel (SDRK) entspricht, zu dem Service-Center (3) übertragen werden.

7. Verfahren nach Anspruch 6, **dadurch gekennzeichnet, dass** die Entschlüsselung des verschlüsselten Codewertes (F) durch den jeweiligen Player- und/oder Recorder-Hersteller (4, 5) durchgeführt wird.

8. Verfahren nach Anspruch 1 oder 2, **dadurch gekennzeichnet, dass** ein Zuerkennungs-Codewert, der aus wenigstens der eindeutigen Kennung des ersten Datenträgers erzeugt wird, zu dem Service-Center übertragen wird, um die zuerkannten Vergünstigungen zu kassieren, wobei das Service-Center (3) den Eigentümer des ersten Datenträgers in Reaktion auf einen abgeschlossenen Prozess der sicheren Superverteilung der Benutzerdaten, die auf dem ersten Datenträger gespeichert sind, belohnt.

9. Verfahren nach Anspruch 1 oder 2, **dadurch gekennzeichnet, dass** optische Platten, insbesondere beschreibbare und/oder wiederbeschreibbare CDs oder DVDs, als Datenträger verwendet werden.

10. Verfahren nach Anspruch 1 oder 2, **dadurch gekennzeichnet, dass** die Benutzerdaten Audiodaten, Videodaten oder Software sind.

11. Verfahren nach Anspruch 1, **dadurch gekennzeichnet, dass** das Service-Center (3) die gespeicherten Informationen verwendet, um Zugriffsrechte auf die Kopie der Benutzerdaten nur für den zweiten Datenträger zu gewähren.

12. System zur sicheren Superverteilung von Benutzerdaten, die auf einem ersten Datenträger gespeichert sind, welches umfasst:
a) einen Player (1) und einen Recorder (2) zum Kopieren der Benutzerdaten von dem ersten Datenträger auf einen zweiten Datenträger, wobei der erste und der zweite Datenträger jeweils eine eindeutige Trägerkennung (UDI) umfassen und Superverteilungsdaten auf dem zweiten Datenträger speichern;
b) Übertragungsmittel zum Übertragen gespeicherter Superverteilungsdaten zu einem Service-Center (3); und
c) ein Service-Center (3) zum Gewähren von Zugriffsrechten auf die Kopie der Benutzerdaten auf dem zweiten Datenträger,
**dadurch gekennzeichnet, dass** der Player (1) dazu vorgesehen ist, einen Codewert (F) aus wenigstens den eindeutigen Trägerkennungen (UDI) des ersten und zweiten Datenträgers zu bestimmen, und der Recorder (2) dazu vorgesehen ist, wenigstens den Codewert (F) und die eindeutige Kennung (UDI-RO) des ersten Datenträgers auf dem zweiten Datenträger zu speichern.

13. Gerät zur Wiedergabe und/oder zum Aufzeichnen von Benutzerdaten zur Verwendung in einem System nach Anspruch 12.

14. Datenträger zum Speichern von Benutzerdaten und Superverteilungsdaten, der bei einem Verfahren zur sicheren Superverteilung nach Anspruch 1 zu verwenden ist, wobei die Superverteilungsdaten umfassen:
a) eine eindeutige Trägerkennung (UDI-RO), welche den Datenträger kennzeichnet;
b) eine Datenkennung (Titel-ID), welche die Benutzerdaten kennzeichnet, die auf dem Datenträger gespeichert sind;
c) eine Superverteilungs-Kennung (SD-ID), die verwendet wird, um Superverteilungs-Funktionalität bereitzustellen;
d) einen oder mehrere Schlüssel (AK), um die Benutzerdaten und/oder Superverteilungsdaten zu verschlüsseln,
**dadurch gekennzeichnet, dass** die Superverteilungsdaten ferner umfassen:
einen Codewert (F), der aus wenigstens der eindeutigen Trägerkennung (UDI-RO) des Datenträgers und einer eindeutigen Trägerkennung (UDI-R) eines zweiten Datenträgers bestimmt wird.

## Revendications

1. Procédé pour la superdistribution sécurisée de données utilisateur stockées sur un premier support de données comportant les étapes de
a) copie desdites données utilisateur dudit premier support de données à un deuxième support de données;
b) stockage sur ledit deuxième support de données des informations qui sont requises par un centre de service (3) pour accorder les droits d'accès à ladite copie desdites données utilisateur; et
c) obtenir les droits d'accès à ladite copie desdites données utilisateur en transmettant au moins lesdites informations stockées audit centre de service (3), en terminant une transaction, et en recevant les informations d'accès additionnelles, ledit centre de service utilisant lesdites informations stockées pour accorder les droits d'accès à ladite copie desdites données utilisateur pour ledit deuxième support de données;
**caractérisé en ce que**
lesdits premier et deuxième supports de données comportent chacun un identifiant unique de support (UDI), et **en ce que** lesdites informations stockées comportent au moins un codet (F) déterminé au moins à partir desdits identifiants de support uniques (UDI) desdits premier et deuxième supports de données.

2. Procédé selon la revendication 1, **caractérisé en ce que** l'accès auxdites données utilisateur stockées sur ledit premier support de données est commandé par une gestion des droits numériques ou par un système d'accès conditionnel.

3. Procédé selon la revendication 1, **caractérisé en ce** lesdits identifiants de support uniques (UDI) sont aussi transmis audit centre de service (3).

4. Procédé selon la revendication 1 ou 3, **caractérisé en ce que** ledit premier support de données comporte un identifiant de superdistribution (SD-ID), qui est utilisé pour déterminer ledit codet (F).

5. Procédé selon la revendication 1, **caractérisé en ce que** ledit codet (F) est chiffré par une clé de lecteur de superdistribution (SDPK) avant le stocker sur ledit deuxième support de données, et **en ce que** ledit codet chiffré (F) est en outre chiffré par une clé d'enregistreur de superdistribution (SDRK) avant la transmission audit centre de service.

6. Procédé selon la revendication 5, **caractérisé en ce que** ledit identifiant de lecteur correspondant à ladite clé de lecteur de superdistribution (SDPK) est stocké sur ledit deuxième support de données, et **en ce que** ledit identifiant de lecteur et un identifiant d'enregistreur correspondant à ladite clé d'enregistreur de superdistribution (SDRK) sont transmis audit centre de service (3).

7. Procédé selon la revendication 6, **caractérisé en ce que** le déchiffrement dudit codet chiffré (F) est réalisé par les fabricants du lecteur et/ou de l'enregistreur respectifs (4, 5).

8. Procédé selon la revendication 1 ou 2, **caractérisé en ce qu'**un codet de récompense généré à partir d'au moins ledit identifiant unique dudit premier support de données est transmis audit centre de service afin de collecter les bénéfices attribués, que ledit centre de service (3) attribue au propriétaire dudit premier support de données en réponse à un traitement terminé de superdistribution sécurisée desdites données utilisateur sur ledit premier support de données.

9. Procédé selon la revendication 1 ou 2, **caractérisé en ce que** des disques optiques, en particulier des CD ou des DVD enregistrables et/ou réinscriptibles, sont utilisés comme supports de données.

10. Procédé selon la revendication 1 ou 2, **caractérisé en ce que** lesdites données utilisateur sont des données audio, des données vidéo, ou un logiciel.

11. Procédé selon la revendication 1, **caractérisé en ce que** ledit centre de service (3) utilise lesdites informations stockées pour accorder des droits d'accès à ladite copie desdites données utilisateur pour ledit deuxième support de données seulement.

12. Système pour une superdistribution sécurisée des données utilisateur stockées sur un premier support de données comportant
a) un lecteur (1) et un enregistreur (2) pour copier lesdites données utilisateur dudit premier support de données à un deuxième support de données, lesdits premier et deuxième supports de données comportant chacun un identifiant de support unique (UDI) et stockant les données de superdistribution sur ledit deuxième support de données;
b) un moyen de transmission permettant de transmettre les données de superdistribution stockées à un centre de service (3); et
c) un centre de service (3) pour accorder les droits d'accès à ladite copie desdites données utilisateur sur ledit deuxième support de données, **caractérisé en ce que**:
ledit lecteur (1) est fourni pour déterminer un codet (F) au moins à partir desdits identifiants de support uniques (UDI) desdits premier et deuxième supports de données, et **en ce que** ledit enregistreur (2) est fourni pour stocker au moins ledit codet (F) et ledit identifiant unique (UDI-RO) dudit premier support de données sur ledit deuxième support de données.

13. Appareil pour la reproduction et/ou l'enregistrement de données utilisateur pour une utilisation dans un système selon la revendication 12.

14. Support de données permettant de stocker les données utilisateur et les données de superdistribution à utiliser dans un procédé pour la superdistribution sécurisée selon la revendication 1, les données de superdistribution comportant
a) un identifiant de support unique (UDI-RO) identifiant le support de données,
b) un identifiant de données (identifiant de titre) identifiant les données utilisateur stockées sur le support de données,
c) un identifiant de superdistribution (SD-ID) utilisé pour fournir la fonctionnalité de superdistribution;
d) une ou davantage de clés (AK) pour chiffrer les données utilisateur et/ou les données de superdistribution, **caractérisées en ce que** lesdites données de superdistribution comportent en outre:
un codet (F) déterminé au moins à partir dudit identifiant de support unique (UDI-RO) dudit support de données et d'un identifiant de support unique (UDI-R) d'un deuxième support de données.
